# EUROPÄISCHE PATENTSCHRIFT

(11) **EP 3 504 508 B1**
(45) Veröffentlichungstag und Bekanntmachung des Hinweises auf die Patenterteilung: **22.04.2020**
(21) Anmeldenummer: 17757659.2
(22) Anmeldetag: 02.08.2017
(51) Int. Cl.: G01B 11/26, B21D 5/00, B21D 5/02

(54) **VORRICHTUNG ZUM AUSRICHTEN EINES WINKELMESSGERÄTS**
DEVICE FOR ALIGNING AN ANGLE MEASURING INSTRUMENT
DISPOSITIF POUR ORIENTER UN APPAREIL DE MESURE ANGULAIRE

(30) Priorität: 24.08.2016 AT 507612016
(43) Veröffentlichungstag der Anmeldung: 03.07.2019
(73) Patentinhaber: KEBA AG, 4041 Linz (AT)
(72) Erfinder: FUNCKE-LEHNER, Thomas, 4201 Eidenberg (AT); PREISINGER, Gernot, 4030 Linz (AT)
(74) Vertreter: Hübscher & Partner Patentanwälte GmbH
(86) Internationale Anmeldenummer: PCT/AT2017/050021
(87) Internationale Veröffentlichungsnummer: WO 2018/035547

(56) Entgegenhaltungen:
- WO-A1-2015/196230
- WO-A1-2016/187638
- DE-A1- 4 312 565

## Beschreibung

### Technisches Gebiet

Die Erfindung bezieht sich auf eine Vorrichtung zum Ausrichten eines Winkelmessgeräts gegenüber zwei einen zu messenden Winkel einschließenden Werkstückebenen, wobei das Winkelmessgerät einen rotierenden Spiegel zum Umlenken eines Laserstrahls senkrecht zur Drehachse des Spiegels aufweist. Zur berührungslosen Messung des Biegewinkels zwischen den Schenkeln eines in einer Biegemaschine zu biegenden Blechs sind Messvorrichtungen bekannt (JP 2002-59217 A), bei denen der Umstand ausgenützt wird, dass die Strahlungsintensität eines an einem Schenkel des Blechs reflektierten, in Abstrahlrichtung empfangenen Laserstrahls am größten ist, wenn der Laserstrahl senkrecht auf den Blechschenkel auftritt (WO 2015/196230 A1). Zu diesem Zweck ist im Bereich des Oberwerkzeugs der Biegemaschine ein Spiegel vorgesehen, der um eine zur Scheitelachse des Biegewinkels parallele Achse gedreht wird und zu dieser Drehachse unter 45° geneigt ist, sodass ein in Richtung dieser Drehachse auf den Spiegel auftreffender Laserstrahl in einer zur Drehachse senkrechten Ebene auf die Schenkel des zu biegenden Blechs abgelenkt und von den Schenkeln reflektiert wird, und zwar in Abstrahlrichtung, wenn der Laserstrahl senkrecht auf den jeweiligen Schenkel steht. Über die zugehörige Drehstellung des Antriebmotors für den Spiegel kann dann der jeweilige Winkel zwischen den beiden Schenkeln in einer Signalverarbeitungseinrichtung ermittelt werden. Zum Ausrüsten üblicher Biegemaschinen mit solchen Messvorrichtungen sind diese Biegemaschinen jedoch konstruktiv anzupassen, was ein Nachrüsten von Biegemaschinen mit Messvorrichtungen dieser Art aufwendig macht. Es wurde daher vorgeschlagen derartige Messvorrichtungen in einem Gehäuse zusammenzufassen, um ein Handgerät zu schaffen, das keinerlei Umrüstarbeiten an den Biegemaschinen erfordert. Aufgrund des Messprinzips ist es allerdings notwendig, das Winkelmessgerät gegenüber den Werkstückebenen, deren gegenseitiger Winkel gemessen werden soll, so auszurichten, dass die durch den drehenden Spiegel bestimmte Ebene des umgelenkten Laserstrahls senkrecht zu den Werkstückebenen steht, was bei einer bloßen Handhabung des Winkelmessgeräts mit Schwierigkeiten verbunden ist.

### Darstellung der Erfindung

Der Erfindung liegt somit die Aufgabe zugrunde, eine Vorrichtung zur genauen Ausrichtung von Winkelmessgeräten der beschriebenen Art gegenüber den Werkstückebenen zu schaffen, deren zwischen ihnen eingeschlossener Winkel gemessen werden soll, ohne die einfache Handhabung des Winkelmessgeräts zu gefährden oder den Messvorgang zu behindern.

Ausgehend von einer Vorrichtung der eingangs geschilderten Art löst die Erfindung gemäß Anspruch 1 die gestellte Aufgabe dadurch, dass dem Winkelmessgerät ein Richtanschlag zugeordnet ist, der eine zur Drehachse des Spiegels parallele Anschlaggerade für beide Werkstückebenen bestimmt.

Aufgrund des Umstands, dass der Richtanschlag eine zur Drehachse des Spiegels parallele Anschlaggerade für die beiden Werkstückebenen bestimmt, muss die Drehachse des Spiegels parallel zur geometrischen Schnittlinie zwischen den beiden Werkstückebenen, und damit parallel zu der durch diese Schnittlinie gebildeten Scheitelachse des zwischen den Werkstückebenen eingeschlossenen Winkels verlaufen, womit die Bedingung erfüllt ist, dass die durch den drehenden Spiegel bestimmte Ebene des umgelenkten Laserstrahls senkrecht zu den Werkstückebenen steht. Das Winkelmessgerät ist demnach so zwischen die beiden Werkstückebenen einzubringen, dass der Richtanschlag mithilfe der Anschlaggeraden gegenüber beiden Werkstückebenen abgestützt wird. Dass bei einer solchen Ausrichtung die Drehlage des Winkelmessgeräts gegenüber den beiden Werkstückebenen bezüglich der Drehachse des Spiegels nicht vorgegeben ist, solange keine zusätzliche Abstützung gegenüber einer Werkstückebene vorgesehen wird, spielt keine Rolle, weil es bei der Ausrichtung des Winkelmessgeräts nur auf die zur Scheitelachse des Winkels parallele Drehachse des Spiegels ankommt, wenn gewährleistet ist, dass der umgelenkte Laserstrahl senkrecht auf beide Werkstückebenen auftreffen kann, was bei einer Handhabung des Winkelmessgeräts ohne Schwierigkeiten sichergestellt werden kann, insbesondere wenn der durch den Richtanschlag bestimmte Abstand der Drehachse des Spiegels von den beiden Werkstückebenen beschränkt wird. Zur Bestimmung einer entsprechenden Anschlaggerade bedarf es lediglich zweier Anschlagpunkte des Richtanschlags.

Der Richtanschlag braucht allerdings nicht für jede Werkstückebene eine gesonderte Anschlaggerade zu bestimmen, wenn sich die beiden Werkstückebenen in einer Kante schneiden, weil in diesem Fall eine mit dieser Schnittkante zusammenwirkende Anschlaggerade an beiden Werkstückebenen anliegt. Ist diese Schnittkante nicht zugänglich oder nicht vorhanden, so muss der Richtanschlag für jede Werkstückebene eine gesonderte Anschlaggerade bestimmen. Ist die Schnittkante zwischen den beiden Werkstückebenen frei zugänglich, so kann der Richtanschlag vorteilhaft ein in der Schnittkante abstützbares Richtlineal umfassen.

Weist der Richtanschlag einen zur Drehachse des Spiegels parallelen Anschlagzylinder auf, der nicht kreisförmig sein muss, so bilden die Erzeugenden dieses Anschlagzylinders die Anschlaggeraden in Abhängigkeit von der Größe des zu messenden Winkels. Die Werkstückebenen verlaufen in diesem Fall tangential zum Anschlagzylinder. Der Anschlagzylinder muss allerdings nicht eine zylindrische Bauform aufweisen, sondern braucht lediglich eine geometrische Zylinderform durch Anschlagpunkte zu bestimmen, die eine Zylinderformvorgeben, wie dies beispielsweise mit zwei in einem gegenseitigem Abstand in Richtung der Drehachse des Spiegels angeordneten Kugeln oder Kugelsegmenten möglich ist.

Damit der Richtanschlag die Werkstückebenen nicht gegenüber dem Laserstrahl abschatten kann, kann er zwei Anschlagabschnitte beidseits der durch den drehenden Spiegel bestimmten Ebene des umgelenkten Laserstrahls aufweisen. Außerdem erleichtert diese Abstützung auf beiden Seiten der Laserstrahlebene die Winkelmessung bei Werkstücken mit einer vergleichsweise kurzen Erstreckung in Richtung der Scheitelachse des zu messenden Winkels. Ein solches Abschatten kann aber auch durchaus erwünscht sein, um das Messergebnis beeinträchtigende Reflexionen im Bereich von Biegekanten mit größeren Biegeradien zu unterbinden. Dazu kann der Richtanschlag das Werkstück im Bereich der Biegekante gegenüber dem Laserstrahl abschatten und den Laserstrahl seitlich ablenken.

Der Richtanschlag selbst kann unterschiedlich ausgebildet sein. So ist es insbesondere zum Nachrüsten von Winkelmessgeräten vorteilhaft, wenn der Richtanschlag eine vom Winkelmessgerät gesonderte Baueinheit mit einer Aufnahme für das Winkelmessgerät bildet. Es ist dabei bloß sicherzustellen, dass die Aufnahme eine entsprechende Ausrichtung des Winkelmessgeräts gegenüber dem Richtanschlag vorgibt. Ist der Richtanschlag Teil des Winkelmessgeräts, so empfiehlt es sich, den Richtanschlag am Gehäuse des Winkelmessgeräts zwischen einer Ruhestellung und einer Arbeitsstellung verstellbar zu lagern, um für die Lagerung und den Transport kleinere Außenabmessungen zu erhalten.

Mit der Verlagerung des Richtanschlags zwischen einer Arbeits- und einer Ruhestellung ergeben sich einfache konstruktive Voraussetzungen, den Richtanschlag mit einem Verschluss für die Laseraustrittsöffnung im Gehäuse des Winkelmessgeräts zu versehen, der diese Laseraustrittsöffnung schützend abdeckt, wenn der Richtanschlag in seine Ruhestellung verlagert wird.

### Kurze Beschreibung der Zeichnung

In der Zeichnung ist der Erfindungsgegenstand beispielsweise dargestellt. Es zeigen
- Fig. 1: eine erfindungsgemäße Vorrichtung in einer zum Teil aufgerissenen Vorderansicht,
- Fig. 2: diese Vorrichtung in einer stirnseitigen Ansicht,
- Fig. 3: die Vorrichtung nach den Fig. 1 und 2 in einer Rückansicht in einem kleineren Maßstab,
- Fig. 4: eine Ausführungsvariante einer erfindungsgemäßen Vorrichtung in einer schematischen Vorderansicht,
- Fig. 5: die Vorrichtung nach der Fig. 4 in einer stirnseitigen Ansicht in einem größeren Maßstab,
- Fig. 6: eine der Fig. 4 entsprechende Darstellung einer weiteren Konstruktionsvariante der erfindungsgemäßen Vorrichtung und
- Fig. 7: eine stirnseitige Ansicht der Vorrichtung gemäß der Fig. 6.

### Weg zur Ausführung der Erfindung

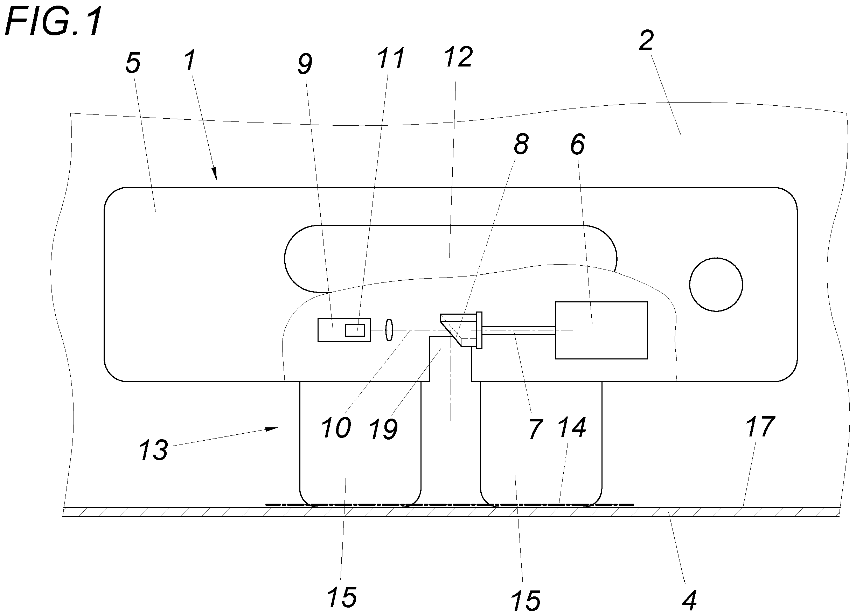

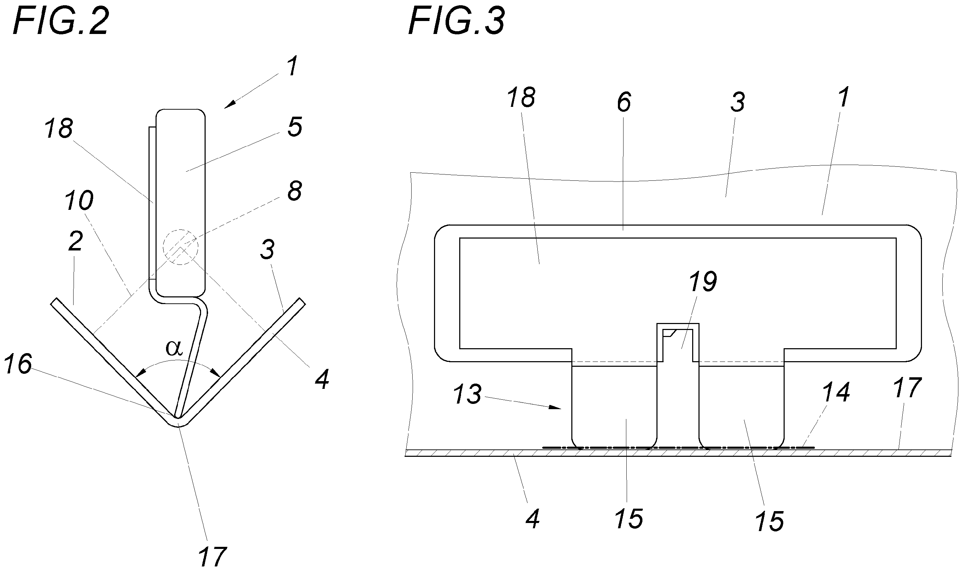

Wie den Fig. 1 und 2 entnommen werden kann, weist das Winkelmessgerät 1 zum Bestimmen des Winkels α zwischen zwei ebenen Werkstückflächen 2, 3, beispielsweise eines mithilfe eines Stempels und einer Matrize gebogenen Blechs 4, ein Gehäuse 5 auf, in dem alle für die Messung und die Messanzeige erforderlichen Mittel zusammengefasst sind. Diese Mittel umfassen in einer rein schematischen Darstellung einen von einem Motor 6 um eine Drehachse 7 antreibbaren Spiegel 8 und einen Lasersender 9 für einen Laserstrahl 10, der in Richtung der Drehachse 7 auf den Spiegel 8 auftrifft, um senkrecht zur Drehachse 7 umgelenkt zu werden. Der umgelenkte Laserstrahl 10 überstreicht die beiden Werkstückflächen 2, 3 bei einer zur Scheitelachse des zu messenden Winkels α parallelen Ausrichtung der Drehachse 7 des Spiegels 8 entlang von zur Scheitelachse senkrechten, sich in der Scheitelachse schneidenden Geraden, die zwischen sich den Winkel α einschließen. Der auf die Werkstückflächen 2, 3 auftreffende Laserstrahl 10 wird an der jeweiligen Werkstückfläche 2, 3 reflektiert, wobei ausschließlich der in Auftreffrichtung reflektierte Laserstrahl 10, also der senkrecht zur Werkstückebene 2, 3 reflektierte Laserstrahl 10, für die Winkelbestimmung über eine Empfangseinrichtung 11 ausgewertet wird, indem diesem reflektierten Laserstrahl 10 die Drehlage des Spiegels 8 zugeordnet wird. Das Messergebnis wird in einer Anzeige 12 angezeigt.

Voraussetzung für einen fehlerfreien Messvorgang ist, dass das Gehäuse 6 des Winkelmessgeräts 1 mit der Drehachse 7 für den Spiegel 8 genau parallel zur Scheitelachse des Winkels α zwischen den beiden Werkstückebenen 2, 3 ausgerichtet werden kann, was bei einer als Handgerät ausgebildeten Messvorrichtung ohne entsprechende Hilfsmittel schwierig ist. Dem Winkelmessgerät 1 wird daher ein Richtanschlag 13 zugeordnet, der wenigstens eine zur Drehachse 7 des Spiegels 8 parallele Anschlaggerade 14 für die beiden Werkstückebenen bestimmt. Nach dem Ausführungsbeispiel der Fig. 1 bis 3 bildet der Richtanschlag 13 zu diesem Zweck ein Richtlineal aus zwei Anschlagabschnitten 15 beidseits der durch den drehenden Spiegel 8 bestimmten Ebene des umgelenkten Laserstrahls 10, wobei die Anlageränder 16 dieser Anschlagabschnitte 15 die Anschlaggerade 14 bestimmen. Wird demnach das aus den beiden Anschlagabschnitten 15 gebildete Richtlineal zwischen den beiden Werkstückebenen 2, 3 mit den Anlagerändern 16 auf die Schnittkante 17 zwischen den beiden Werkstückebenen 2, 3 aufgesetzt, so kann das Winkelmessgerät 1 in einfacher Weise messgerecht gegenüber den Werkstückebenen 2, 3 ausgerichtet gehalten werden.

Der Richtanschlag 13 gemäß den Fig. 1 bis 3 ist als vom Winkelmessgerät 1 gesonderte Baueinheit ausgebildet, die eine winkelförmige Aufnahme 18 zur formschlüssigen Befestigung des Gehäuses 5 aufweist. Die Halterung des Gehäuses 5 in der Aufnahme 18 kann vorzugsweise mithilfe von Permanentmagneten erfolgen, was jedoch nicht zwingend ist. Die beiden Anschlagabschnitte 15 des Richtlineals stehen von der winkelförmigen Aufnahme 18 entsprechend ab, sodass sich die Laseraustrittsöffnung 19 des Gehäuses 5 in einem entsprechenden Abstand von der Schnittkante 17 zwischen den beiden Werkstückebenen 2, 3 befindet, um gute Messbedingungen zu erzielen. Damit auch bei kürzeren Winkelschenkeln der Laserstrahl 10 senkrecht auf beide Werkstückebenen 2, 3 abgestrahlt werden kann, kann der Abstand der Drehachse 7 des Spiegels 8 von der Scheitelachse des zu messenden Winkels α durch den Richtanschlag 13 beschränkt werden. Zu diesem Zweck kann der Abstand der Drehachse 7 des Spiegels 8 von der Anschlaggeraden 10 bis 80 mm, vorzugsweise 10 bis 40 mm betragen.

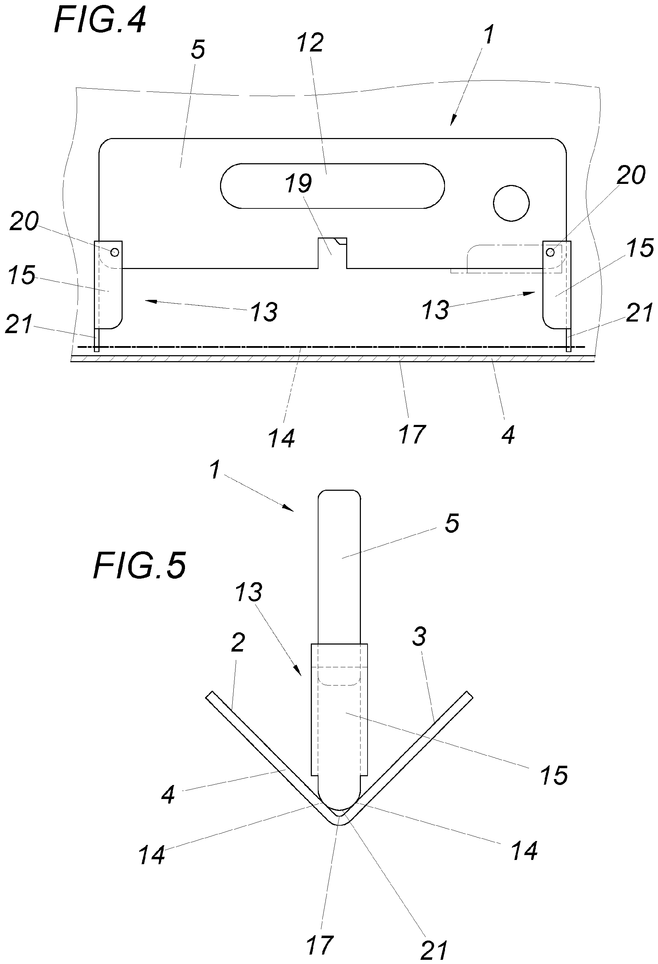

Wie das Ausführungsbeispiel nach den Fig. 4 und 5 zeigt, ist es auch möglich, das Winkelmessgerät 1 selbst mit dem Richtanschlag 13 zu versehen. Zu diesem Zweck werden wiederum zwei Anschlagabschnitte 15 auf dem Gehäuse 5 um Achsen 20 schwenkbar gelagert. Dies bedeutet, dass die Anschlagabschnitte 15 aus einer strichpunktiert angedeuteten Ruhestellung in die in vollen Linien dargestellte Arbeitsstellung ausgeschwenkt werden können.

Zum Unterschied zum Ausführungsbeispiel nach den Fig. 1 bis 3 bestimmen die beiden Anschlagabschnitte 15 einen Anschlagzylinder 21, weil sie eine Halbkreisform in einer zur Scheitelachse des Winkels α senkrechten Ebene aufweisen. Wie der Fig. 5 entnommen werden kann, ergeben sich durch diesen Anschlagzylinder 21 zwei durch je eine Erzeugende des Anschlagzylinders 21 gebildete Anschlaggerade 14, über die sich der Richtanschlag 13 an den beiden Werkstückebenen 2 und 3 abstützt. Auch in diesem Fall wird beim Aufsetzen des Richtanschlags 13 auf die beiden Werkstückebenen 2, 3 eine genaue Messausrichtung des Winkelmessgeräts 1 gegenüber den Werkstückebenen 2, 3 sichergestellt.

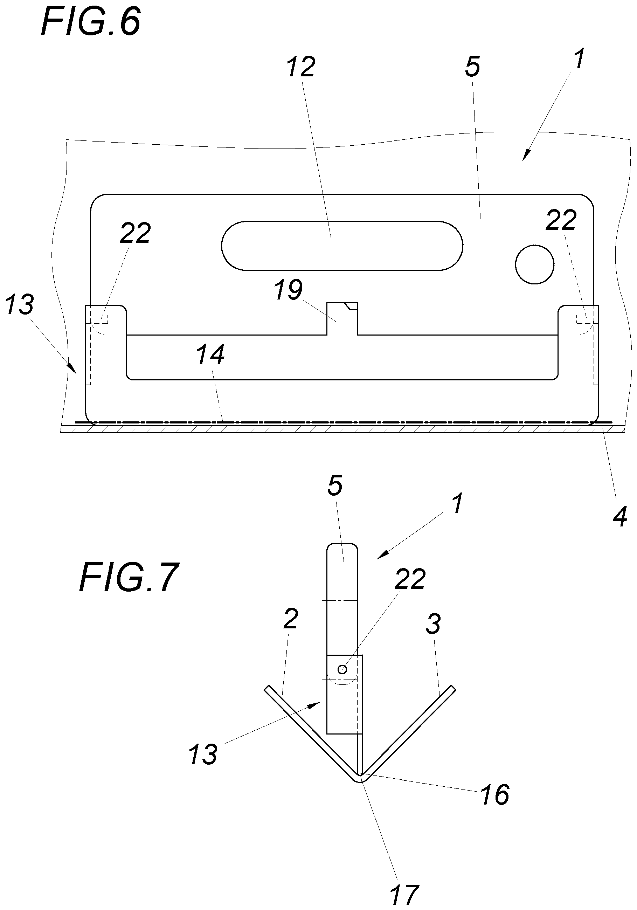

Nach den Fig. 6 und 7 ergibt sich ein in seiner Wirkung der Ausführungsform nach den Fig. 1 bis 3 entsprechender Richtanschlag 13, der ein durchgehendes Richtlineal bildet, dessen Anlagerand 16 mit der Schnittkante 17 zwischen den Werkstückebenen 2 und 3 zusammenwirkt, wie dies insbesondere der Fig. 7 entnommen werden kann. Der Richtanschlag 13 ist in diesem Fall um Achsen 22 schwenkbar am Gehäuse 5 gelagert, die parallel zu der durch das Richtlineal gebildeten Anschlaggeraden 14 verlaufen.

## Patentansprüche

1. Winkelmessgerät (1) mit zugeordnetem Richtanschlag (13) zum Ausrichten des Winkelmessgeräts (1) gegenüber zwei einen zu messenden Winkel einschließenden Werkstückebenen (2, 3), wobei das Winkelmessgerät (1) einen rotierenden Spiegel (8) zum Umlenken eines Laserstrahls (10) senkrecht zur Drehachse (7) des Spiegels (8) aufweist, **dadurch gekennzeichnet, dass** das Winkelmessgerät (1) ein Gehäuse aufweist, in dem alle für die Messung und die Messanzeige erforderlichen Mittel zusammengefasst sind, und dass der Richtanschlag (13) eine zur Drehachse (7) des Spiegels (8) parallele Anschlaggerade (14) für beide Werkstückebenen (2, 3) bestimmt.

2. Winkelmessgerät mit Richtanschlag nach Anspruch 1, **dadurch gekennzeichnet, dass** der Richtanschlag (13) ein auf der Innenseite einer Schnittkante (17) zwischen den Werkstückebenen (2, 3) abstützbares Richtlineal bildet.

3. Winkelmessgerät mit Richtanschlag nach Anspruch 1, **dadurch gekennzeichnet, dass** der Richtanschlag (13) einen zur Drehachse (7) des Spiegels (8) parallelen Anschlagzylinder (21) bildet.

4. Winkelmessgerät mit Richtanschlag nach einem der Ansprüche 1 bis 3, **dadurch gekennzeichnet, dass** der Richtanschlag (13) zwei Anschlagabschnitte (15) beidseits der durch den drehenden Spiegel (8) bestimmten Ebene des umgelenkten Laserstrahls (10) aufweist.

5. Winkelmessgerät mit Richtanschlag nach einem der Ansprüche 1 bis 4, **dadurch gekennzeichnet, dass** der Richtanschlag (13) eine vom Winkelmessgerät (1) gesonderte Baueinheit mit einer Aufnahme (18) für das Winkelmessgerät (1) bildet.

6. Winkelmessgerät mit Richtanschlag nach einem der Ansprüche 1 bis 3, **dadurch gekennzeichnet, dass** der Richtanschlag (13) am Gehäuse (5) des Winkelmessgeräts (1) zwischen einer Ruhestellung und einer Arbeitsstellung verstellbar gelagert ist.

7. Winkelmessgerät mit Richtanschlag nach Anspruch 6, **dadurch gekennzeichnet, dass** der Richtanschlag (13) in seiner Ruhestellung einen Verschluss zum Abdecken der Laseraustrittsöffnung (19) im Gehäuse (5) des Winkelmessgeräts (1) bildet.

## Claims

1. Angle measuring device (1) having an allocated orientation stop (13) for orientation of the angle measuring device (1) with respect to two workpiece planes (2, 3) forming an angle to be measured, wherein the angle measuring device (1) has a rotating mirror (8) for deflecting a laser beam (10) perpendicular to the axis of rotation (7) of the mirror (8), **characterised in that** the angle measuring device (1) comprises a housing in which all means required for measurement and measurement display are brought together, and that the orientation stop (13) determines a stop straight line (14) parallel to the axis of rotation (7) of the mirror (8) for both workpiece planes (2, 3).

2. Angle measuring device having an orientation stop as claimed in claim 1, **characterised in that** the orientation stop (13) forms a straightedge which can be supported on the inner side of an intersection edge (17) between the workpiece planes (2, 3).

3. Angle measuring device having an orientation stop as claimed in claim 1, **characterised in that** the orientation stop (13) forms a stop cylinder (21) which is parallel to the axis of rotation (7) of the mirror (8).

4. Angle measuring device having an orientation stop as claimed in any one of claims 1 to 3, **characterised in that** the orientation stop (13) comprises two stop sections (15) on both sides of the plane of the deflected laser beam (10) determined by the rotating mirror (8).

5. Angle measuring device having an orientation stop as claimed in any one of claims 1 to 4, **characterised in that** the orientation stop (13) forms an assembly separate from the angle measuring device (1), having a receiver (18) for the angle measuring device (1).

6. Angle measuring device having an orientation stop as claimed in any one of claims 1 to 3, **characterised in that** the orientation stop (13) is mounted on the housing (5) of the angle measuring device (1) so as to be displaceable between an inoperative position and a working position.

7. Angle measuring device having an orientation stop as claimed in claim 6, **characterised in that** in its inoperative position, the orientation stop (13) forms a closure for covering the laser outlet opening (19) in the housing (5) of the angle measuring device (1).

## Revendications

1. Appareil de mesure angulaire (1) avec une butée d'orientation (13) associée pour orienter l'appareil de mesure angulaire (1) par rapport à deux plans de pièce (2,3) renfermant un angle à mesurer, lequel appareil de mesure angulaire (1) comprend un miroir rotatif (8) pour dévier un faisceau laser (10) perpendiculairement à l'axe de rotation (7) du miroir (8), **caractérisé en ce que** cet appareil de mesure angulaire (1) possède un boîtier dans lequel tous les moyens nécessaires pour la mesure et pour l'affichage de la mesure sont réunis et que la butée d'orientation (13) définit une droite de butée (14) parallèle à l'axe de rotation (7) du miroir (8) pour les deux plans de pièce (2, 3).

2. Appareil de mesure angulaire avec une butée d'orientation selon la revendication 1, **caractérisé en ce que** la butée d'orientation (13) forme une règle d'orientation pouvant s'appuyer sur la face interne d'une arête de coupe (17) entre les plans de pièce (2,3).

3. Appareil de mesure angulaire avec une butée d'orientation selon la revendication 1, **caractérisé en ce que** la butée d'orientation (13) forme un cylindre de butée (21) parallèle à l'axe de rotation (7) du miroir (8).

4. Appareil de mesure angulaire avec une butée d'orientation selon une des revendications 1 à 3, **caractérisé en ce que** la butée d'orientation (13) possède deux segments de butée (15) de part et d'autre du plan du faisceau laser dévié (10) défini par le miroir rotatif (8).

5. Appareil de mesure angulaire avec une butée d'orientation selon une des revendications 1 à 4, **caractérisé en ce que** la butée d'orientation (13) forme une unité de construction séparée de l'appareil de mesure angulaire (1) avec un réceptacle (18) pour l'appareil de mesure angulaire (1).

6. Appareil de mesure angulaire avec une butée d'orientation selon une des revendications 1 à 3, **caractérisé en ce que** la butée d'orientation (13) est montée sur le boîtier (5) de l'appareil de mesure angulaire (1) de manière réglable entre une position de repos et une position de travail.

7. Appareil de mesure angulaire avec une butée d'orientation selon la revendication 6, **caractérisé en ce que** la butée d'orientation (13) forme en position de repos un obturateur pour recouvrir l'orifice de sortie du faisceau laser (19) dans le boîtier (5) de l'appareil de mesure angulaire (1).
